# EUROPÄISCHE PATENTSCHRIFT

(11) **EP 0 772 937 B1**
(45) Veröffentlichungstag und Bekanntmachung des Hinweises auf die Patenterteilung: **28.10.1998**
(21) Anmeldenummer: 95925725.4
(22) Anmeldetag: 25.07.1995
(51) Int. Cl.: H04N 7/14

(54) **VERFAHREN ZUM VERBINDUNGSAUFBAU UND ZUM STEUERN DER BILDTELEFONKOMMUNIKATION**
VIDEOPHONE COMMUNICATION CONNECTION AND CONTROL PROCESS
PROCEDE D'ETABLISSEMENT DE LIAISONS ET DE COMMANDE DE COMMUNICATIONS VISIOPHONIQUES

(30) Priorität: 25.07.1994 DE 4426253
(43) Veröffentlichungstag der Anmeldung: 14.05.1997
(73) Patentinhaber: SIEMENS AKTIENGESELLSCHAFT, 80333 München (DE)
(72) Erfinder: SEBESTYEN, Istvan, D-81476 München (DE)
(86) Internationale Anmeldenummer: DE9500974
(87) Internationale Veröffentlichungsnummer: WO9603837

(56) Entgegenhaltungen:
- EP-A- 0 535 890
- WO-A-93/18607
- NTZ NACHRICHTENTECHNISCHE ZEITSCHRIFT, Bd. 44, Nr. 12, 1.Dezember 1991 Seiten 880-883, XP 000275399 HINZ R 'KOMMUNIKATIONSPROTOKOLL FUER BILDTELEFON-ENDEINRICHTUNGEN'
- FUNKSCHAU, Bd. 65, Nr. 25, 26.November 1993 MÜNCHEN, Seiten 126-130, XP 000417932 GERHARD KAFKA 'DATENEXPRESS MIT GUTEN AUSSICHTEN'
- COMPUTER JOURNAL, Bd. 36, Nr. 1, 1.Januar 1993 Seiten 55-67, XP 000360265 WAKEMAN I 'PACKETIZED VIDEO-OPTIONS FOR INTERACTION BETWEEN THE USER, THE NETWORK AND THE CODEC'
- AT & T TECHNICAL JOURNAL, Bd. 72, Nr. 1, 1.Januar 1993 Seiten 22-32, XP 000367732 EARLY S H ET AL 'THE VIDEOPHONE 2500 VIDEO TELEPHONY ON THE PUBLIC SWITCHED TELEPHONE NETWORK'

## Beschreibung

Die Erfindung betrifft ein Verfahren zum Verbindungsaufbau und ein Verfahren zur Steuerung von digital komprimierten Audio-, Video- und Datensignalen zwischen Bildtelefon-Endgeräten über analoge und/oder digitale Kommunikationsnetze sowie Verfahren zur optinalen Übertragung von Standbildern, Dateien, Kamerasowie Cursor-Fernsteuerungsinformationen zwischen Bildtelefon-Endgeräten.

Die über analoge Schnittstellen an ein analoges oder an ein digitales Kommunikationsnetz anschließbaren Bildtelefone werden für die gleichzeitige Übertragung digital codierter Audio-, Video-, und Datensignale benutzt. Ein analoges Netz in diesem Sinne ist z.B. das analoge Telefonnetz, im folgenden auch als PSTN (Public Switched Telephone Network) bezeichnet. Als Beispiel für ein digitales Kommunikationsnetz kann das digitale Mobilfunk-Netz GSM (Global Standard for Mobile Communications) genannt werden. Nach einem Verbindungsaufbau zwischen zwei Bildtelefon-Endgeräten werden die akustischen Ursprungssignale von einem Mikrofon des sendenden Gerätes in analoge elektrische Schwingungen umgewandelt, die digital codiert, komprimiert und zeitgleich mit den Videoinformationen über das analoge Fernsprechnetz an das empfangende Bildtelefon-Endgerät übertragen werden. Im empfangenden Bildtelefon-Endgerät werden die empfangenen digital komprimierten Sprachsignale dekomprimiert und in analoge elektrische Signale umgewandelt, die zeitgleich in akustische Signale umgewandelt und ausgegeben werden. Zur gleichen Zeit werden die analogen, von einer Kamera aufgenommenen Bewegtbilder des sendenden Gerätes ebenfalls digital codiert, komprimiert und zeitgleich mit den Audioinformationen über das analoge Fernsprechnetz an das empfangende Bildtelefon-Endgerät übertragen. Im empfangenden Bildtelefon-Endgerät werden die empfangenen digital komprimierten Videosignale dekomprimiert und in analoge elektrische Signale umgewandelt, die zeitgleich als Bewegtbilder in diesem Empfangs-Bildtelefon-Endgerät ausgegeben werden. Bei Bildtelefonie wird prinzipiell in beiden Richtungen ein bidirektionaler Vollduplex-Informationsaustausch vorausgesetzt, das heißt, beide kommunizierenden Bildtelefon-Endgeräte können zur selben Zeit Sender und Empfänger von Audio-, Video-, Steuer- und eventuell anderen Informationsarten sein.

Insbesondere, als zusätzliche Optionen können gleichzeitig Standbilder und Computer-Dateien vom sendenden zum empfangenden Bildtelefon Endgerät übertragen werden. Der Standbildübertragung wird eine Sonderrolle zugeordnet, falls die Leitungsqualität des Netzes nur eine niedrige Gesamtübertragungsrate (z.B. unter 8 kbit/s) erlaubt, die die geforderte Mindestqualität von Bewegtbildern nicht mehr gewährleistet.

Aufgabe der Erfindung ist das Bereitstellen eines Verfahrens und einer Anordnung zum sicheren, einfach zu realisierenden Kommunizieren zwischen Bildtelefon-Endgeräten, unabhängig davon, ob die Kommunikationsendgeräte über analoge oder digitale Schnittstellen an das jeweilige Kommunikationsnetz angeschlossen sind.

Die Erfindung löst diese Aufgabe durch ein Verfahren mit den Merkmalen des Anspruches 1 bzw. eine Anordnung mit den Merkmalen des Anspruchs.
Diese Komponente beinhaltet:
- Verbindungsaufbau
- Steuerung der Kommunikation
- Übertragung von Standbildern
- Übertragung von Dateien (File Transfer)
- Optionale Übertragung des Kamera-Fernsteuerungs-Befehls
- Optionale Übertragung des Cursor(Zeiger)-Fernsteuerungs-Befehls.

Darüber hinaus sind Anordnungen und Verfahren zur Durchführung eines solchen Verfahrens angegeben.

Diese Aufgabe wird gelöst durch ein Verfahren mit den Merkmalen des Anspruches 1. Detaillierte Ausgestaltungen sind Gegenstand von Unteransprüchen.

Bei Verwendung des erfindungsgemäßen Verfahrens ist prinzipiell in beiden Richtungen ein bidirektionaler voll-duplexer Informationsaustausch vorausgesetzt.

Die Erfindung baut - abhängig von den einzelnen Realisierungsformen und Besonderheiten - auf den folgenden Informationstechnologie- und/oder Kommunikationstechnologie-Standards auf:
- Die in der ITU-T gegenwärtige Normierung von Sprachcodierern mit sehr niedrigen Bitraten z.B. für das Bildfernsprechen im öffentlichen Telefonwählnetz führt zu qualitativ guten Sprachcodierern (annähernd der Qualität der CCITT G.726 Empfehlung) mit Übertragungsgeschwindigkeit von 4-8 kbit/s.
- Die in der ITU-T und ISO/IEC gegenwärtige Normierung von Bewegtbildcodierern mit sehr niedrigen Bitraten, z.B. für das Bildfernsprechen im öffentlichen Telefonwählnetz (Draft ITU-T H.26P), führt zu qualitativ brauchbaren Bewegtbildcodierern mit der zweckmäßigen Übertragungsgeschwindigkeit von 8-24 kbit/s.
- Die in der ITU-T und ISO/IEC abgeschlossene Normierung von Standbildern mit kontinuierlichen Graustufen oder Farben (ITU-T T.81 | ISO/IEC 10918-1) mit sehr niedrigen Bitraten, z.B. für das Bildfernsprechen im öffentlichen Telefonwählnetz mit der zweckmäßigen Übertragungsgeschwindigkeit von 4-24 kbit/s.
- Die in der ITU-T und ISO/IEC abgeschlossene Normierung von Zwei-Farben-Standbildern (ITU-T T.82 | ISO/IEC 11544) mit sehr niedriger Bitrate, z.B. für das Bildfernsprechen im öffentlichen Telefonwählnetz mit der zweckmäßigen Übertragungsgeschwindigkeit von 4-24 kbit/s.
- Die in der ITU-T und ISO/IEC laufende Standardisierung des Dateiaustauschformats ITU-T T.84 | ISO/IEC 10918-3 ("Extentions") für Bildkommunikation. Die Standbildkompressionsalgorithmen ITU-T T.81 | ISO/IEC 10918-1 ("JPEG" - für kontinuierliche Farbbilder") und ITU-T T.82 | ISO/IEC 11544 ("JBIG" - für bi-level Standbilder) werden unterstützt.
- Die gegenwärtige Normierung in der ITU-T von Multiplexing von audiovisuellen Datenarten mit sehr niedriger Bitrate, z.B. für das Bildfernsprechen im öffentlichen Telefonwählnetz mit Übertragungsgeschwindigkeit von 9,6-32 kbit/s.
- Die in der ITU-T verabschiedete Normierung des Hochgeschwindigkeits-Modems ITU-T V.34, das im öffentlichen Telefonwählnetz in Abhängigkeit der Leitungsqualität die Übertragungsgeschwindigkeit von 2,4-28,8 kbit/s ermöglicht.
- Die in der ITU-T verabschiedete Normierung des Modem-Initialisierungs-Standards ITU-T V.8, die die Grundlage einer auch für Bildtelefonie geeignete Initialisierungsprozedur bietet, falls sie mit Funktionalitäten und Code-Punkten für Bildtelefonie erweitert wird.
- Die in der ITU-T verabschiedete Normierung der Dateibeschreibung in der ITU-T T.434 "Binary file transfer for the telematic services".

Nachstehend werden die Vorteile erfindungsgemäßer Verfahren beschrieben:
- Beim Verbindungsaufbau:
   Die zur Zeit auf dem Markt angebotenen PSTN Bildtelefone bedienen sich langsamerer - in die Familie der ITU-T V.32 gehörender - Modems. Diese Modems erlauben nur Ubertragungsgeschwindigkeiten, die eine niedrigere Qualität von Audio- und Video-Bildern sowohl für Stand- als auch Bewegtbilder zulassen. Ein Vorteil der ITU-T V.32 Modemlösung ist die Möglichkeit, die Kommunikation zwischen zwei Bildtelefon-Endgeräten zunächst - wie es vom Bildtelefondienst angestrebt wird - als normale Sprachtelefon-Kommunikation zu beginnen, und bei Bedarf die Video-Kommunikation zuzuschalten. Bei Verwendung des Hochgeschwindigkeitsmodems ITU-T V.34, das eine wesentlich bessere Audio- und Bildqualität ermöglicht ist dies jedoch unmittelbar nicht möglich. Ein erfindungsgemäßes Verfahren ermöglicht die oben gewünschte Funktionalität auch bei der Verwendung des ITU-T V.34 Modems und der dazugehörende ITU-T V.8 Initialisierung zu erreichen.
- Bei der Steuerung der Kommunikation:
   Die gegenwärtige Standardisierung der Multiplexing von Datenarten (Audio-, Video-, Daten- und Steuerungs-Informationsarten) sieht innerhalb eines zu entwickelnden LAP-x-(Link Access Protocol)-Verfahrens, die unabhängige Übertragung von virtuellen Kanälen vor. Dabei sollen Steuerungs-Informationsarten einen eigenen, gesicherten virtuellen Kanal mit hoher Übertragungspriorität zugeordnet werden. Dies wird mit einer Variante dem bereits bekannten HDLC-LAP-Verfahren erreicht. Ein erfindungsgemäßes Verfahren soll die Steuerung der Bildtelefonkommunikation ermöglichen.
- Bei der Übertragung von Standbildern:
   Die zur Zeit auf dem Markt angebotenen Bildtelefone bieten die Übertragung von Standbildern nur in der einfachsten Form an. Es wird entweder ein "eingefrorenes" Bewegtbild mit den deren physikalischen Dimension angeboten, oder mit einer verdoppelten Auflösung. Ein erfindungsgemäßes Verfahren soll die Definition und Steuerung der optionalen - Standbilder bei Bildtelefonkommunikation wesentlich vielfältiger - ermöglichen. Hierbei sollen Standbilder unterschiedlicher Natur (z.B. schwarz/weiß und Farbbilder) und flexibler Bild-Auflösungs-Größe, und Standbilder mit sequentieller Bildaufbau (zeilen- oder blockweise von oben nach unten und von links nach recht) und/oder mit progressivem Bildaufbau (es wird als erstes - jedoch schnell - ein Bild mit gröberer Bildqualität übertragen; mit dem Fortfahren der Übertragung wird die Bildqualität Schritt für Schritt verbessert). Miniatur-Bilder (sog. Ikonen) werden ebenfalls unterstützt. Der progressive Bildaufbau - ein besonderer Vorteil des erfindundmäßigen Verfahren - erlaubt, daß trotz niedriger Datenrate komplizierte Standbilder mit minimaler Verzögerung in Realzeit codiert, übertragen und dekodiert werden können, wobei die Bildqualität des dekodierten Bildes sich Schritt für Schritt bis zur maximaler Bildqualität verbessert.
- Bei der Übertragung von Dateien:
   Ein erfindungsgemäßes Verfahren ermöglicht optional einen Dateiaustausch (File Transfer mit Hilfe von ITU-T T.434) zwischen sendendem und empfangendem Bildtelefon-Endgerät.
- Bei der Übertragung von Kamera-Fernsteuerungs-Anweisungen:
   Ein erfindungsgemäßes Verfahren beschreibt eine optionale Fernsteuerung der Kamera des kommunizierenden Partners. Dies dient zur Unterstützung von bestimmten Anwendungen, wie z.B. Verkehrsüberwachung.
- Bei der Übertragung von Cursor-Fernsteuerungs-Anweisungen:
   Ein erfindungsgemäßes Verfahren beschreibt eine optionale Fernsteuerung eines Cursors (Zeigers) auf den Bildschirm des kommunizierenden Partners. Dies dient zur Unterstützung der visuellen Kommunikation.

Nachstehend wird die Erfindung anhand von besonders günstigen Realisierungsformen der Erfindung unter Bezugnahme auf die Figuren näher erläutert:

Es zeigt:
- Figur 1: die Blockdarstellung eines Bildtelefon-Kommunikationsendgerätes KES;
- Figur 2: die Anwendung des CI Signals und der Austausch des CM/CJ Menues im Rahmen der ITU-T V.8 Initialisierungsprozedur;

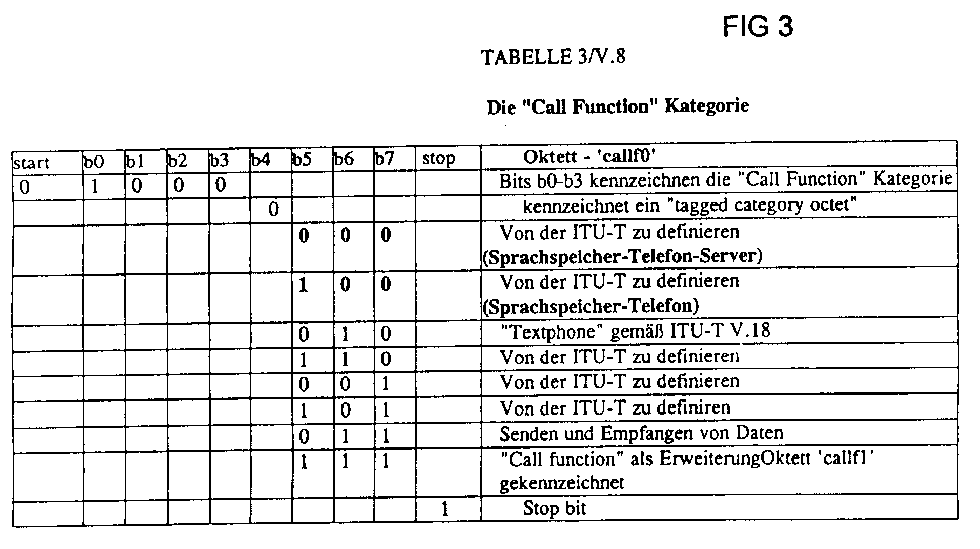

- Figur 3: die Tabelle 3/V.8 der "Call Function" Kategorie eines Ausführungsbeispiels der erweiterten ITU-T V.8 Initialisierungsprozedur;
- Figur 4: die Tabelle 4/V.8 der "Modulations Modi" Kategorie der erweiterten ITU-T V.8 Initialisierungsprozedur;

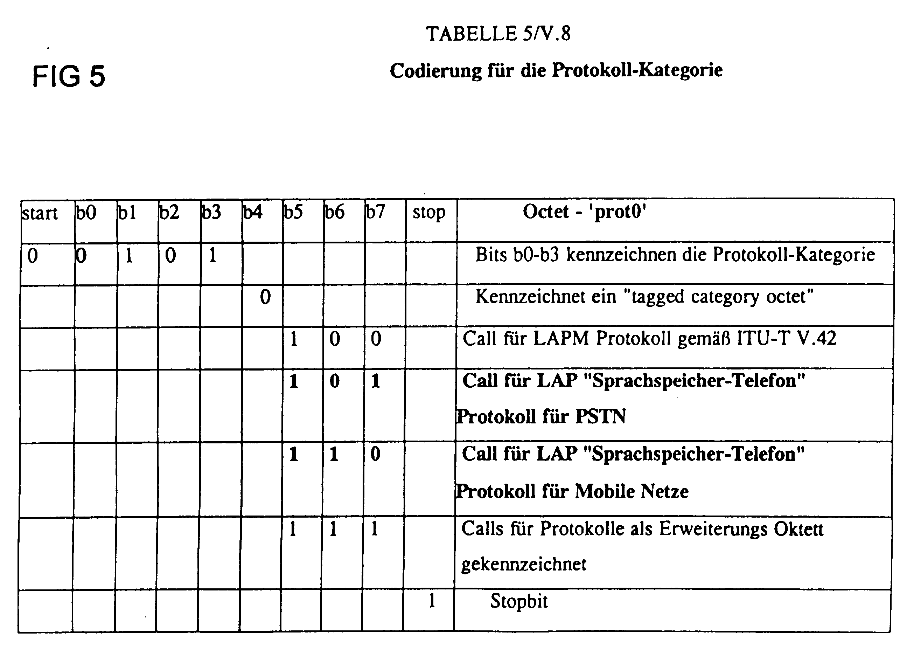

- Figur 5: die Tabelle 5/V.8 der Codierung der Protokoll Kategorie der erweiterten ITU-T V.8 Initialisierungsprozedur;

Vorzugsweise werden die im folgenden normierten oder zukünftig zu normierenden Elemente der Informationstechnologie und/oder Telekommunikation verwendet:
- Modem ITU-T V.34 mit einer höheren Übertragungsgeschwindigkeit (bis zu 28000-32000 Bit/s), und die dazu gehörende Initialisierungsprozedur nach ITU-T V.8.
- Eine für die angeführten Anwendungen notwendige Erweiterung der ITU-T V.8 Empfehlung.
- Die zuverlässige und fehlerrobuste Übertragung von Informationsblöcken (ein HDLC-LAP gemäßes paketvermitteltes Übertragungsprotokoll) der Draft "ITU-T H.24P" .
- Die gegenwärtige Normierung von Sprachcodierern mit sehr niedriger Bitrate für das Bildfernsprechen im öffentlichen Telefonwählnetz in ITU-T mit einer Übertragungsrate von 5 - 7 kBit/s.
- Die in der ITU-T und ISO/IEC gegenwärtige Normierung von Bewegtbildkodierern mit sehr niedrigen Bitraten z.B. für das Bildfernsprechen im öffentlichen Telefonwählnetz in ITU-T (Draft ITU-T H.26P) mit der zweckmäßigen Übertragungsgeschwindigkeit von 8-24 kbit/s.
- Die in der ITU-T abgeschlossene Normierung der Dateibeschreibung in der ITU-T T.434 "Binary file transfer for the telematic services".
- Die in der ITU-T und ISO/IEC abgeschlossene Normierung von Standbildern mit kontinuierlichen Graustufen oder Farben (ITU-T T.81 | ISO/IEC 10918-1) mit niedrigen Bitraten mit der zweckmäßigen Übertragungsgeschwindigkeit 4-24 kbit/s.
- Die in der ITU-T und ISO/IEC abgeschlossene Normierung von Zwei-Farben-Standbildern (ITU-T T.82 | ISO/IEC 11544) mit niedrigen Bitraten mit der zweckmäßigen Übertragungsgeschwindigkeit 4-24 kbit/s.
- Die in der ITU-T und ISO/IEC laufende Standardisierung des Dateiaustauschformats ITU-T T.84 | ISO/IEC 10918-3 ("Extentions") für Bildkommunikation. Die Standbildkompressionsalgorithmen ITU-T T.81 | ISO/IEC 10918-1 ("JPEG" - für kontinuierliche Farbbilder") and ITU-T T.82 | ISO/IEC 11544 ("JBIG" - für bi-level Standbilder) werden unterstützt.

Zur Realisierung der vorliegenden Erfindung brauchen die obengenannten Standards kombiniert und zum teilweise erweitert werden.

Nachstehend werden einige Eigenschaften von zur Realisierung eines erfindungsgemäßen Verfahrens vorzusehenden Kommunikationsendgeräten näher erläutert:

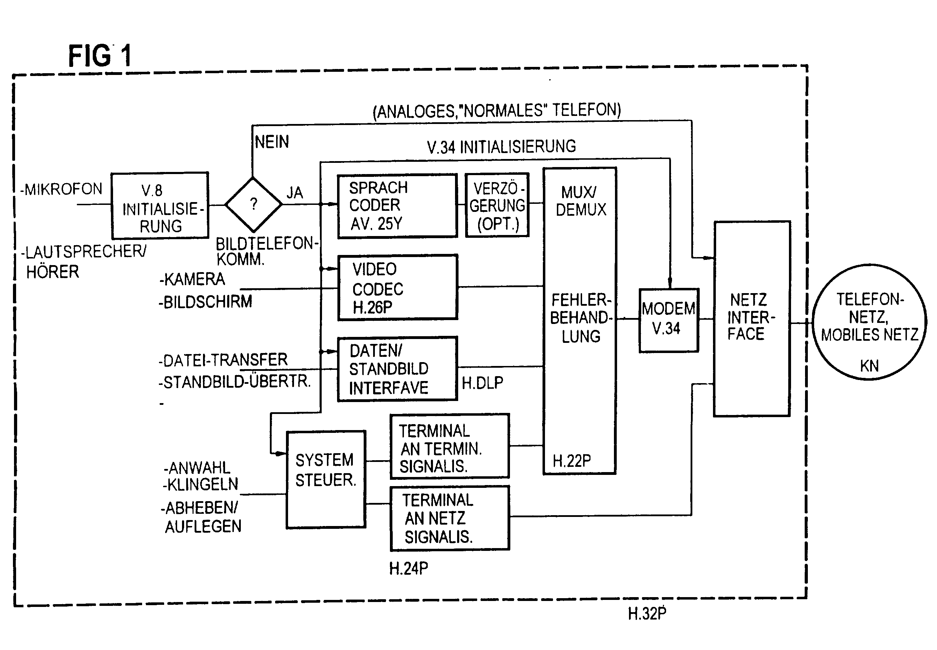

Ein typisches Bildtelefon-Endgerät für den erfindungsgemäßen Verbindungsaufbau (Anspruch 1) erfüllt mindestens die Merkmale eines Telefons für das öffentliche Telefonwählnetz oder eines Funktelefons und zusätzlich eine Kommunikationssteuereinrichtung zum Steuern der Datenübertragung mit Hilfe eines HDLC-LAP gemäßen Übertragungsprotokolls (um eine fehlerfreie Kommunikation zu sichern), ein ITU-T V.34 Modem, und eine geeignete ITU-T V.8 Initialisierungsprozedur. Zusätzlich sollte zumindest das sendende Kommunikationsendgerät (KES) außerdem eine Audio- und eine Video-Codiervorrichtung zum Komprimieren des Audio- und Video-Eingangsdigitalsignales, bzw. das empfangende Kommunikationsendgerät (KEE) enthalten und außerdem mindestens eine Audio-und Video-Decodiervorrichtung zum Entkomprimieren der empfangenen Audio- und Video-Informationsdaten. Figur 1 enthält ein vereinfachtes Blockschaltbild eines solchen BildtelefonKommunikationsendgerätes. Während der Verbindung ist das Bildtelefon entweder mit einem anderen Bildtelefon oder mit einem normalen Telefon verbunden.

Die Verbindung zu anderen Bildtelefonen oder zu normalen Telefonen wird entweder als Verbindung der Bildtelefone hergestellt (die dazu notwendigen Erweiterungen sind noch in der ITU-T V.8 zu standardisieren) oder, falls dies nicht geht, zu normalen Telefonen. Für den Verbindungsaufbau bedeutet das, daß das sendende Bildtelefon zunächst versucht - sofort, d.h. ohne Zeitverzögerung - das angerufene Gerät als empfangendes "Bildtelefon" anzusprechen (Signalisierung mit Hilfe von ITU-T V.8). Dies ist wichtig, weil nach ITU-T V.8 dem Netz unverzüglich signalisieren werden muß, daß unter Umständen (z.B. bei Übertragung durch Satelliten) ein besonders hochwertiger Kommunikations-Kanal für die Verbindung zur Verfügung gestellt werden muß, da die höchsmöglichste ITU-T V.34 Geschwindigkeit unterstützt werden soll. Deshalb ist eine V.8 Signalisierung in der selben Verbindung, nach Beenden eines normalen Telefongesprächs (z.B. eine Umschaltung ins Bildtelefonmodus), mit Hilfe von ITU-T V.8 und ITU-T V.34 weder sinnvoll, noch möglich. Eine beispielhafte Ausführung einer erweiterten ITU-T V.8 Initialisierung wird im Anhang 1 beschrieben. Antwortet das angerufene Endgerät als "Bildtelefon" (ebenfalls mit Hilfe von ITU-T V.8), kann mit Hilfe von ITU-T V.34 die digitale Verbindung für den Informationsaustausch aufgebaut werden. Falls das angerufene Gerät z.B. ein Daten-Modem oder ein Fax-Gerät ist, so wird die Verbindung abgebrochen. Ist das gerufene Gerät ein normales Telefon, das über keine ITU-T V.8-Prozedur verfügt, so erfolgt die Umschaltung zum normalen "Telefonmodus" automatisch. In diesem Falle wird die Verbindung als normales "Telefongespräch" weitergeführt.

Treffen jedoch zwei Bildtelefone aufeinander, so werden gemäß ITU-T V.8 die Endgeräte-Identifikationen zwischen Sender und Empfänger ausgetauscht um zu signalisieren, daß Bildtelefon-Kommunikation möglich ist.

Nach erfolgreicher ITU-T V.8 Signalisierung, wird die ITU-T-V.34-Prozedur der Modems eingeleitet. Nach dem "Line probing" und "Trainieren" im Voll-Duplex-Modus (d.h. Bestimmen der Leitungsgüte und Austesten der maximal geeigneten Modemgeschwindigkeit) wird auch die Auswahl der höchsten Modemgeschwindigkeit nach Regeln von ITU-T V.34 durchgeführt.

Für den Voll-Duplex-Modus müssen die Steuer-Kommandos der Kommunikationssteuerung als Teil des ITU-T-V.34-Daten-Transfers ausgetauscht werden. Dazu muß ein virtueller "Supervisory Control"-Kanal (Steuerkanal) definiert werden. Die Datenpakete dieses Kanals werden besonders als Kontroll-Pakete gekennzeichnet. Als Steuerkommandos gelten - für beide Kommunikationspartner - u.a. die folgenden:
- Gegenseitiger Austausch der Geräteeigenschaften (GEREIG) des Senders und des Empfängers (z.B. Kennzeichnen der Video-Parameter (z.B. Bildschirmauflösung, Optionen für Standbild, Datei-Transfer, Kamera-Fernsteuerungskontrolle, Cursor-Fernbewegungs-Fähigkeit usw.) - Austausch der Geräteeigenschaften erfolgt einmal, nämlich am Anfang der Verbindung.
- Mitteilen der präferierten Empfangsparameter (EMPFPAR) (optional - jederzeit)
- Einstellen der Sendeparameter (SENDPAR) (anhand der deklarierten Geräteeigenschaften des Senders und Empfängers, und unter Berücksichtigung der Präferenzen des anderen Partners) - Einstellung und Austausch mindestens einmal, am Anfang der Kommunikation, dann beliebig oft, zu jedem beliebigen Zeitpunkt. Die Einstellung wird jeweils vom sendenden Partner bestimmt, der Empfänger kann nur seine "Empfangswünsche" (Präferenzwünsche) äußern. Falls keine Empfangspräferenzen erhalten, stellt der Sender die Werte ein, die sich an Hand der gemeinsamen Geräteparameter sich ergeben.
- Senden eines Standbilds (SENDSTD) (optional - jederzeit)
- Abrufen eines Standbilds (ABRSTD) (optional - jederzeit)
- Senden einer Datendatei (SENDDAT) (optional - jederzeit)
- Abrufen einer Datendatei (ABRDAT) (optional - jederzeit)
- Kamera-Fernsteuerung des Partners (CAMSTR) (optional - jederzeit)
- Cursor-Fernsteuerung (CURSSTR) (optional - jederzeit)
- Normales Beenden der Kommunikation (EXIT)
- Abbruch der Kommunikation (ABBRUCH)
- Bestätigung der Steuerkommandos (ACKNOW)

Die eigentliche Kommunikation zwischen Sender und Empfänger entspricht der Datenphase von ITU-T V.34 (nach erfolgreicher "ITU-T V.34 Resynch"). Hier wird mit der vorher bestimmten maximalen Geschwindigkeit kommuniziert. Für die Bildtelefon-Kommunikation ist ein Fehlerkorrekturmodus gemäß der HDLC LAP erforderlich. Dazu müssen die digitalisierten Datenblöcke erzeugt und numeriert werden (HDLC LAP gemäß Draft ITU-T H.24P). Jeder Informationsart wird eine Übertragungspriorität zugeordnet. Dabei haben Steuer-Daten die höchste Übertragungpriorität, und dies bei voller Fehlerkorrektur. Falls ein Block als fehlerhaft erkannt wurde, so muß er entweder erneut übertragen werden (falls die Informationsart unbedingt gesichert übertragen werden muß, z.B. im "Supervisory Kanal", Standbild-Übertragung, File-Transfer), oder auch der fehlerhafte Block kann auch ignoriert werden (z. B. Bewegtbildübertragung). Eine detaillierte Beschreibung der Informationsblockarten und der zugehörigen Prioritäten werden im Tabelle 1 dargestellt.

**Tabelle 1**

| Informationsarten und Prioritäten | | | |
|---|---|---|---|
| **Informations-Block-Art** | **Art der Priorität** | **Default-Werte für Fehlerkorrektur** | **Default-Werte für Übertragungspriorität** |
| Steuer (Supervisory) | Fest | Block wiederholen, bis fehlerfrei | Sehr hoch |
| Bewegtbild (Video) | Definierbar | Fehlerhafte Blöcke können verworfen werden | Mittel |
| Audio / Sprache | Definierbar | Fehlerhafte Blöcke können verworfen werden | Hoch |
| Standbild | Definierbar | Block wiederholen, bis fehlerfrei | Niedrig |
| Datei (File Transfer) | Definierbar | Block wiederholen, bis fehlerfrei | Niedrig |
| Kamera-Fernsteuerung | Fest | Block wiederholen, bis fehlerfrei | Sehr hoch |
| Cursor-Fernsteuerung | Fest | Block wiederholen, bis fehlerfrei | Sehr hoch |

Die feste Priorität bedeutet, daß die Priorität im Laufe der Kommunikation nicht geändert werden kann. Die Default-Priorität ist jener Prioritätswert, die am Anfang der Kommunikation als Ausgangswert vom System eingestellt wurde. Bei der definierbaren Priorität können diese Werte vom Sender entweder auf Wunsch des Empfängers und durch eigene Entscheidung ein oder mehrmals geändert werden (Steuerbefehl SENDPAR). Der Wunsch des Empfängers wird mit dem Mitteilen der präferierten Empfangsparameter (Steuerbefehl EMPFPAR, optionaler, vom Empfänger jederzeit ausgegebbarer Befehl) kundgetan. Als Reaktion kann der Sender (aber muß nicht) die Sende- und die Fehlerkorrektur-Prioritäten ändern. Beispielsweise kann der Empfänger präferieren, daß er eine schnelle fehlerfreiesAudio-Signal-Übertragung, der verspäteten aber synchronisierten und Sprach-Bildsynchronisation vorzieht. Der Sender kann die Sende-Prioritäten auch aus eigener Initiative ebenfalls ändern, beispielsweise die Sende-Priorität des Standbildes in einer Verbindung auf Kosten der Bewegtbild-Priorität.

Das korrekte Empfangen der Steuerparameter SENDPAR und EMPFPAR werden mit dem Steuerbefehl (ACKNOW) quittiert, oder bei Fehler mit (NOTACK) negativ quittiert.

Als konkretes Beispiel: Die Lösung der gewünschten Audiokommunikation (wie beim normalen Telefon) am Anfang der Kommunikation und die "Umschaltung" in Bildtelefon-Kommunikation spielt sich folgendermaßen ab: Verbindungaufbau V.8-Initialisierung, V.34-Modem-Initialisierung. Nach erfolgreichem Ablauf, V.34-Daten-Mode, Austausch von Geräteeigenschaften (optional Präferenzen), beide Partner senden am Anfang nur Audio-Information an den anderen Partner. Bei der "Umschaltung" zum Bildtelefonmodus fängt mindestens einer der Kommunikations-Partner an, auch Bewegtbildinformationen in die Sendedatenstrom einzubetten.

Erfindungsgemäße Verfahren ermöglichen die Definition und Steuerung der optionalen Standbildübertragung. Hierbei sollen Standbilder unterschiedlicher Natur (z.B. schwarz/weiß und Farbbilder) und flexibler Bild-Auflösungs-Größe, und Standbilder mit sequentiellem Bildaufbau (zeilen- oder blockweise von oben nach unten und von links nach recht) und/oder mit progressivem Bildaufbau (es wird als erstes - jedoch schnell - ein Bild mit gröberer Bildqualität übertragen; mit dem Fortfahren der Übertragung wird die Bildqualität Schritt für Schritt verbessert). Miniatur-Bilder (sog. Ikone) werden ebenfalls unterstützt.

Die optionalen Empfangsmöglichkeiten des Senders und des Empfängers werden nach Austausch der Geräteeigenschaften (mit dem Steuerbefehl GEREIG) des Senders und des Empfängers eingestellt. Dieser Austausch erfolgt nur einmal, am Anfang der Verbindung oder beim Fehlerfall und Abbruch beim RESET. Optional kann auch das Mitteilen der präferierten Empfangsparameter (mit EMPFPAR) erfolgen. Dieser Austausch ist optional, und kann jederzeit erfolgen.

Einstellen der Sendeparameter erfolgt mit SENDPAR anhand der deklarierten Geräteeigenschaften des Senders und Empfängers, und der Präferenzen des anderen Partners. Diese Einstellung und Austausch erfolgt mindestens einmal, am Anfang der Kommunikation, als Antwort auf die Geräteeigenschaften und Präferenzen (falls vorhanden), kann eventuell beliebig oft, zu jedem beliebigen Zeitpunkt erneut erfolgen. Die Einstellung wird jeweils vom sendenden Partner bestimmt, der Empfänger kann nur seine "Empfangswünsche" (Präferenzwünsche) äußern. Falls keine Empfangspräferenzen erhalten, stellt der Sender die Werte ein, die sich an Hand der gemeinsamen Geräteparameter ergeben. In GEREIG wird festgelegt ob, und was für ein Standbild vom empfangenen Endgerät unterstützt werden kann (z.B. Bildgröße, Möglichkeit des sequentiellen und des progressiven Bildaufbaus, Unterstützung von ITU-T T.81 | ISO/IEC 10918-1 ("JPEG") und/oder ITU-T T.82 | ISO/IEC 11544 ("JBIG")). Das Senden eines Standbildes wird mit dem Kommando (SENDSTD) oder ABRDAT (Abrufen eines beim anderen Partner bereitgestellten Standbilds) optional - jederzeit - initialisiert. Danach werden Standbilddatenblöcke - mit der spezifizierten oder Default-Priorität - den anderen Datenarten beigemischt und übertragen. Alternativ das Abrufen eines Standbildes (mit der Steueranweisung ABRSTD) vom anderen Partner ebenfalls optional - jederzeit möglich. Bei der Übertragung werden die Bilddaten in einem Datenstrom eingebettet, der nach ITU-T T.84 | ISO/IEC 10918-3 spezifiziert wurde. Alle so definierten Dateien enthalten alle wichtige Informationen bezüglich des zu übertragenden Bildes (z.B. Bildauflösung, Bilddimension, Art des Bildaufbaus usw.). Die Art der Darstellung des empfangenen Bildes liegt im Freiheitsbereich des Empfängers. Die erfolgreiche Ausführung wird mit der Bestätigungs-Anweisung (Mit dem Kommando ACKNOW) bestätigt, oder wird eine negative Bestätigung (NOTACK) mitgeteilt (z.B. wenn das Bild nicht zu dekodieren ist).

Beim Steuerbefehl "Übertragung von Dateien" (File Transfer) erfolgt der Austausch von Geräteeigenschaften, Präferenzen und Einstellungen der Parameter wie oben bei der Übertragung der Standbilder beschrieben. Hiervon abweichend sind nur die Kommandos für das Senden einer Datendatei (SENDDAT). Dieses Kommando ist optional, und kann jederzeit ausgegeben werden. Die erfolgreiche Ausführung wird mit der Bestätigungs-Anweisung, dem Kommando ACKNOW, bestätigt. Andernfalls wird eine negative Bestätigung (NOTACK) mitgeteilt, z.B. wenn das Bild nicht zu dekodieren ist.

Danach werden nach ITU-T T.434 geformte Dateien in speziell gekennzeichneten Datenblöcken in den Datenstrom der Bildtelefon-Datenblöcke gemischt.

Das Abrufen einer Datendatei wird mit der Steueranweisung (Kommando) (ABRDAT) erreicht. Diese Anweisung ist ebenfalls optional und kann jederzeit ausgegeben werden. Die erfolgreiche Ausführung wird mit der Bestätigungs-Anweisung (ACKNOW) bestätigt, oder es wird eine negative Bestätigung (NOTACK) mitgeteilt.

Danach werden nach ITU-T T.434 geformte Dateien in speziell gekennzeichneten Datenblöcken in den Datenstrom der Bildtelefon-Dateblöcke gemischt.

Ebenso eine Cursor-Fernsteuerung (CURSSTR) kann optional, jederzeit von dem sendenden Partner ausgegeben werden. Die erfolgreiche Ausführung wird mit der Bestätigungs-Anweisung (ACKNOW) bestätigt, oder es wird eine negative Bestätigung (NOTACK) mitgeteilt.

Die Anweisung "Normales Beenden" der Kommunikation (EXIT) führt zum ordnungsgemäßen Abschluß der Kommunikation. Die Geräte werden in ihren Grundzustand gesetzt. Diese Anweisung muß mit einer Bestätigungs-Anweisung ("Acknowlegment") (ACKNOWL) des anderen Partners bestätigt werden. Nur dann kann der Abschluß der Kommunikation beendet werden.

Eine Anweisung "Abbruch der Kommunikation" (ABBRUCH) kann, falls vorgesehen, zum schnellen Abbruch der Kommunikation führen. Diese Anweisung wird in der Regel nach einem Fehler ausgegeben, um einen ordnungsgemäßen Abschluß der Endgeräte zu erreichen, und die Kommunikation abzubrechen. Es ist günstig aber nicht unbedingt notwendig, daß diese Anweisung mit der Bestätigungs-Anweisung (ACKNOWL) beantwortet wird. Die Anweisung "Abbruch mit RESET" hat eine ähnliche Funktion, mit dem Unterschied jedoch, daß die Kommunikation nicht abgebrochen wird, sondern alle Parameter auf ihr Ausgangsstadium zurückgesetzt werden, um eine erneute Kommunikation zu ermöglichen.

Des weiteren wird ein Ausführungsbeispiel für die ITU-T V.8 (Anhang 1) und ITU-T V.34 Parametrisierung unter Einfügung von Erweiterungen vorgeschlagen. Die V.8bis Initialisierungsprozedur ist ähnlich (Anhang 2).

Anhang 1 und Anhang 2 sind Teil der Beschreibung.

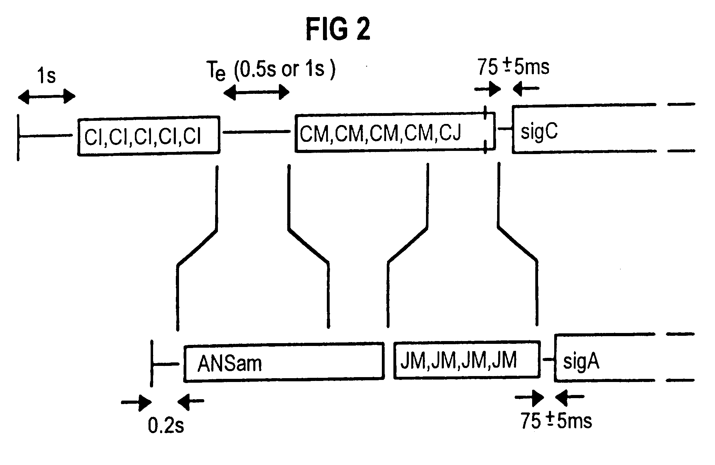

Figur 2 illustriert die V.8 "Start up"-Prozedur der Session Initialisierung. Diese ist im Zusammenhang eines V.34-Modems unbedingt notwendig. Die V.8-"Start up"-Prozedur wird einmal, am Anfang der Kommunikationsverbindung aktiv.

Wie aus Figur 2 ersichtlich ist, beträgt in einer Verbindung gemäß V.8 (und danach V.34) nach Verbindungsdurchschaltung die Verzögerung auf der Seite des rufenden Endgerätes (DCE) etwa 1 Sekunde. Danach werden die CI-Signale (CI = "call identicator") mit 300 b/s übertragen, bis das angerufene Endgerät (DCE) nicht mit einem ANSam-Signal ("Anwer tone signal" von V.8) antwortet. Danach sendet das rufende DCE die Signale CMs ("Call Menu" Signale, mit der Auswahl der sog. "Call Function" Kategorien - z.B. "Sprachspeicher-Telefon", mit der Auswahl der Modem Modulation - z.B. für V.34 Voll-Duplex, mit der Auswahl der Protokoll Kategorie - LAP "?"). Das gerufene DCE reflektiert - mit seinem "JM" Signalen - die gleiche Art der Information, um seine Geräteeigenschaften zu deklarieren. Anhand der beiden Tabellen wird festgestellt ob die Kommunikation zwischen beiden Partnern möglich ist. Falls ja, so folgt die V.34-Prozedur in der Regel innerhalb von 2 Sek.

Ist der gerufene DCE kein "Sprachspeicher-Telefon" sondern z.B. ein normales Telefon, so wird die V.8 Prozedur mit dem Ablauf einer bestimmten Zeitspanne (Timer) abgebrochen. Diese Zeitspanne wird nicht in der V.8 spezifiziert, sondern in der Anwendung des "Sprachspeicher-Telefons".

In der gegenwärtigen Version von ITU-T V.8 fehlen die CM/JM Code-Zuweisungen des "Sprachspeicher-Telefons. Diese Zuweisungen werden auf Verlangen von der ITU vorgenommen. Nachstehend ist ein Beispiel angegeben, wie man sie vornehmen könnte.

Die Tabelle 3/V.8 spezifiziert die "Call Function"-Kategorie von V.8. Im ersten Oktett sind von der ITU einige Code-Punkte bereits reserviert. Für das "Sprachspeicher-Telefon" sollen zwei Code-Punkte reserviert werden. Die gezeigten Code-Punkte wurden beispielhaft belegt.

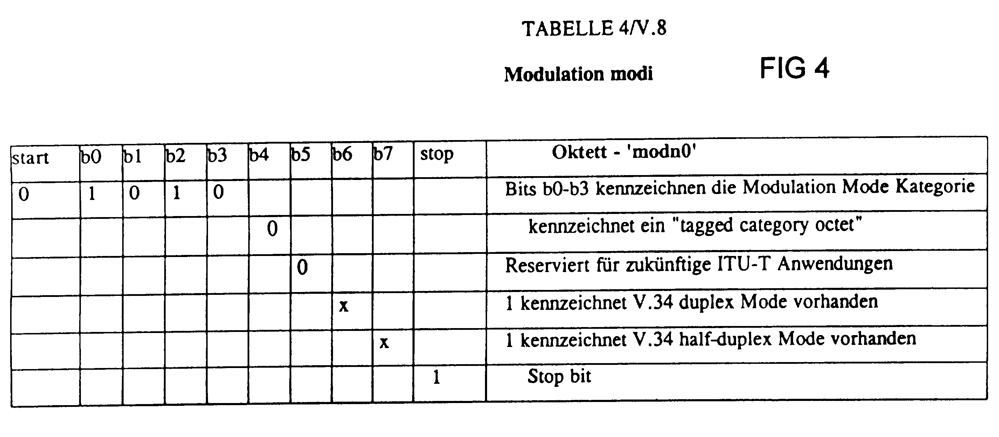

Die Modulations Modi sind in der TABELLE 4/V.8 (s. Fig. 4) spezifiziert.

Das Oktett für mögliche "Protokolle" kann auch weggelassen werden, falls nur ein Protokoll für den "Sprachspeicher-Telefon"-Service spezifiziert wird. Sollten mehrere Protokolle verwendet werden, z.B. für unterschiedliche Netz-Typen (PSTN, Mobil), so wird dieses Oktett benutzt und entsprechende Code-Punkte für die Protokoll-Typen spezifiziert.

Die GSTN-Zugriff-Kategorie ist in der (nicht dargestellten) TABELLE 6/V.8 definiert. Sie indiziert, ob das rufende oder das gerufene Endgerät über das Mobil-Telefon-Netz angeschlossen ist.

Der Austausch zusätzlicher Informationen ist durch ITU-T V.8 nicht vorgesehen, da V.8 für den Austausch größerer Informationen doch zu langsam ist (300 b/s). Deshalb sollen alle zusätzliche Aushandlungen bzw. Steuer-Kommandos über die Prozeduren des ITU-T V.34 Modems laufen.

Nach dem erfolgreichen Ablauf des V.8 "start-up" läuft auch ein V.34 "start-up" ab. Dieser beinhaltet:
- V.34 "Line Probing" (Leitungsqualität Abschätzung)
- V.34 HDX (Halb-duplex) oder FDX (Voll-duplex) "Training"
- V.34 Parameter Austausch
- V.34 Resynchronisation.

Nur anschließend wechselt V.34 zu seinem Daten Transfer Mode, wo die eigentliche Anwender-Daten ausgetauscht werden.

Ein sog. "Retrain" (Neu-Training) von V.34 läuft ab, falls die Leitungsqualität während der Datenkommunikation doch nicht ausreichen sollte. Der Datentransfer wird unterbrochen und per "Retrain" eine neue Übertragungsgeschwindigkeit mit ausreichender Qualität eingestellt. Dann wird die Übertragung der Daten fortgesetzt. In der gegenwärtigen Version von V.34 kann während des "Retrains" keine zeitgleiche Übertragung der Anwender-Daten (z.B. Audio Information) erfolgen.

Nach erfolgereicher ITU-T V.8 Signalisierung wird die ITU-T V.34-Prozedur der Modems eingeleitet. Nach dem "Line probing" und "Trainieren in Voll- oder Halb-Duplex-Modus" (d.h. Bestimmen der Leitungsgüte und Austesten der maximal geeigneten Modemgeschwindigkeit) wird auch die Auswahl der höchsten Modemgeschwindigkeit nach Regeln von ITU-T V.34 durchgeführt. Anschließend werden (nur für den Halb-Duplex-Modus) erneut nach ITU-T V.34 die V.34 Parameter ausgetauscht und mit 1200 bit/s die für die Kommunikation notwendigen Steuer-Kommandos ausgetauscht. Für den Voll-Duplex-Modus müssen die Steuer-Kommandos tauscht. Für den Voll-Duplex-Modus müssen die Steuer-Kommandos als Teil des Daten-Transfers ausgetauscht werden. Dazu muß ein virtuelles "Supervisory Control"-Kanal definiert werden. Die Datenpakete dieses Kanals werden speziell gekennzeichnet. Als Steuerkommandos gelten mindestens die folgenden:
- Austausch zusätzlicher Geräteeigenschaften des Senders und des Empfängers, wie z.B. Kennzeichnen der Audio/Sprach-Kompression, Mail-Box-Fähigkeit, Halb-/Voll-Duplex Fähigkeit, Mitteilung der Empfangspräferenzen;
- Einstellen der gemeinsamen, präferierten Sende- oder Empfangsparameter anhand der deklarierten Geräteeigenschaften des Senders und Empfängers; Öffnen und Schießen von virtuellen Anwender-Kanälen (z.B. für Audio).
- Senden einer Nachricht;
- Abrufen einer Nachricht;
- Adressierung einer Sprach-Mail-Box;
- Normales Beenden der Kommunikation;
Abbruch der Kommunikation.

## Patentansprüche

1. Verfahren zum Verbindungsaufbau zwischen Bildtelefon-Kommunikationsendgeräten (KES, KEE) unter Verwendung eines gesicherten Übertragungsprotokolls im Rahmen der ITU-T V.8-Initialisierung und eines ITU-T V.34 Modems, dadurch **gekennzeichnet,** daß im Rahmen der ITU-T V.8-Initialisierung die Bildtelefon-Kommunikation unterstützt wird, indem u.a. dem Netz noch während des Verbindungsaufbaus der Wunsch nach hoher Übertragungsgüte für die Bildtelefon-Kommunikation signalisiert wird, und daß das rufende Endgerät den Typ des gerufenen Endgeräts und den Typ des an dieses angeschlossenen Übertragungsnetzes erkennt.

2. Verfahren zum Steuern der Bildtelefonkommunikation zwischen Bildtelefon-Kommunikationsendgeräten (KES, KEE) in einem virtuellen Steuerkanal im Rahmen eines ITU-T V.34-Informationstransfers;
**gekennzeichnet** durch einen virtuellen Steuerungskanal mit HDLC LAP gesicherter Übertragung der Steuer-Datenblöcke im bidirektionalen Voll-Duplex-Modus, mit den in der folgenden Tabelle angegebenen Steueranweisungen:
| **Steueranweisung** | **Funktion** | **Aktions-Zeitpunkt** | **Aktions-Anzahl** | **Steuerungs-Reaktionen** |
|---|---|---|---|---|
| GEREIG (vorgeschrieben) | Austausch der Geräte-Eigenschaften; GEREIG wird von beiden Partnern gleichzeitig gesendet | Sofort, nach Einrichtung des virtuellen Steuerkanals | Einmal | ACKNOW oder NOTACK mit event. anschließendem SENDPAR |
| EMPFPAR (optional) | Parameter der erwünschten Empfangpräferenzen. Kann von einem oder beiden Partnern unabhängig gewünscht werden. | Ab Austausch der GEREIG | Beliebig | ACKNOW oder NOTACK |
| SENDPAR (vorgeschrieben) | Einstellen der Sendeparameter anhand von empfangenen GEREIG und EMPFPAR | Sofort nach Empfang und Bestätigung von GEREIS des anderen Partners | Mindestens einmal | ACKNOW oder NOTACK |
| SENDSTD (optional) | Sende Standbild. Bilddatei und Bildparameter eingebettet in ITU-T T.84 ISO/IEC 10918-3 Datenstrom | Falls die Option beim Empfänger (GEREIS) zugelassen, jederzeit | beliebig | ACKNOW oder NOTACK |
| ABRSTD (optional) | Abruf Standbild. Bilddatei und Bildparameter eingebettet in ITU-T T.84 ISO/IEC 10918-3 Datenstrom | Falls die Option beim Sender und Empfänger (GEREIS) zugelassen, jederzeit | beliebig | ACKNOW oder NOTACK |
| SENDDAT (optional) | Sende Datei. Datei und Dateiparameter eingebettet in ITU-T T.434 Datenstrom | Falls die Option beim Empfänger (GEREIS) zugelassen, jederzeit | beliebig | ACKNOW oder NOTACK |
| ABRDAT (optional) | Abruf Datei. Datei und Dateiparameter eingebettet in ITU-T T.434 Datenstrom | Falls die Option beim Sender und Empfänger (GEREIS) zugelassen, jederzeit | beliebig | ACKNOW oder NOTACK |
| CAMSTR (optional) | Fernsteuerung (Schwenken, Zoom usw. ) der Kamera des anderen Partners | Falls die Option beim Sender verfügbar und beim Empfänger (GEREIS, EMPFPAR) zugelassen, jederzeit | beliebig | ACKNOW NOTACK |
| CURSSTR (optional) | Cursor-Fernsteuerung. Bewegen eines Cursors in der Bildfläche des anderen Partners | Falls die Option beim Sender verfügbar und beim Empfänger (GEREIS, EMPFPAR) zugelassen, jederzeit | beliebig | ACKNOW oder NOTACK |
| EXIT (vorgeschrieben) | Ordnungsgemäße Abschluß der Kommunikation | Kann von beiden Seiten initialisiert werden | einmal | ACKNOW oder NOTACK |
| ABBRUCH (vorgeschrieben) | Abbruch im Fehlerfall - Beenden der Kommunikation | Kann von beiden Seiten initialisiert werden | einmal | ACKNOW oder NOTACK |
| ABBRUCH mit RESET (vorgeschrieben) | Abbruch im Fehlerfall - Erhalten der Kommunikation, Zurücksetzen aller Default- Parameter | Kann von beiden Seiten initialisiert werden | beliebig | ACKNOW oder NOTACK mit anschließendem GEREIG |
| ACKNOW (vorgeschieben) | Positive Bestätigung einer Steuer-Anweisung | Steuer-Empfänger | einmal | keine |
| NOTACK (vorgeschieben) | Negative Bestätigung einer Steuer-Anweisung | Steuer-Empfänger | beliebig | Neue Steueranweisung |

3. Verfahren nach Anspruch 2, dadurch **gekennzeichnet,** daß zur Steuerung unterschiedlicher Informationsarten jeder der Informationsarten mit Hilfe des HDLC LAP Verfahrens ein "virtueller" Kanal zugeordnet wird, und den verschiedenen Datenarten entweder feste oder frei-definierbare Übertragungprioritäten und/oder Fehlerkorrekturprioritäten zugeordnet werden, wobei anstelle von frei-definierbaren Prioritäten zu Beginn der Kommunikation voreingestellte Normal-Parameter verwendet werden, die im Laufe der Kommunikation mit Hilfe der Steueranweisungen EMPFPAR und SENDPAR umdefiniert werden können.

4. Verfahren nach Anspruch 2 oder 3, dadurch **gekennzeichnet,**
daß Bilddateien in ITU-T T.84 | ISO/IEC 10918-3 Datei-Formate eingebettet sind;
daß die Parameter der Bilddateien in der ITU-T T.84 | ISO/IEC 10918-3 eingebettet sind;
daß kontinuierliche Farbbilder gemäß ITU-T T.81 | ISO/IEC 10918-1 -"JPEG" - mit variabler Bildgröße mit sequentiellem oder progressivem Bildaufbau unterstützt werden;
daß "Ikonen" der kontinuierlichen Farbbilder gemäß ITU-T T.81 | ISO/IEC 10918-1 - "JPEG" - mit variabler Bildgröße unterstützt werden;
daß bi-level (z.B. schwarz/weiß) Bilder gemäß ITU-T T.82 | ISO/IEC 11544 - "JBIG" - mit variabler Bildgröße mit sequentiellem oder progressivem Bildaufbau unterstützt werden;
daß die Möglichkeit der Übertragung mit den Steueranweisungen GEREIG, EMPFAR und SENDPAR ausgehandelt und eingestellt werden; und
daß die Steuerung der Standbildübertragung mit den Steueranweisungen SENDSTD und ABRSTD erfolgt, und deren Empfang mit ACKNOW bestätigt wird, oder bei Fehler mit NOTACK negativ bestätigt wird.

5. Verfahren nach Anspruch 2, 3 oder 4, dadurch **gekennzeichnet,**
daß beliebige Programm- oder Daten-Dateien gemäß ITU-T T.434 definiert werden;
daß die Möglichkeit der Übertragung mit den Steueranweisungen GEREIG, EMPFAR und SENDPAR ausgehandelt und eingestellt werden;
daß die Steuerung der Datei-Übertragung mit den Steueranweisungen SENDDAT und ABRDAT erfolgt, und deren Empfang mit ACKNOW bestätigt wird oder bei Fehler mit NOTACK negativ bestätigt wird.

6. Verfahren nach Anspruch 2, 3, 4 oder 5, **gekennzeichnet** durch eine derartige Fernsteuerung der Kamera,
daß die Möglichkeit der Übertragung mit den Steueranweisungen GEREIG, EMPFAR und SENDPAR ausgehandelt und eingestellt wird;
daß die Steuerung der Datei-Übertragung mit den Steueranweisungen CAMSTR erfolgt, und deren Empfang mit ACKNOW bestätigt wird, oder bei Fehler mit NOTACK negativ bestätigt wird.

7. Verfahren nach Anspruch 2, 3, 4, 5 oder 6, **gekennzeichnet** durch eine derartige Fernsteuerung des Cursors,
daß sie mit den Steueranweisungen CURSSTR erfolgt, und deren Empfang mit ACKNOW bestätigt wird, oder bei Fehler mit NOTACK negativ bestätigt wird und daß die Möglichkeit der Übertragung mit den Steueranweisungen GEREIG, EMPFAR und SENDPAR ausgehandelt und eingestellt wird.

## Claims

1. Process for setting up a connection between videophone communications terminals (KES, KEE) by using a protected transmission protocol as part of the ITU-T V.8 initialization and an ITU-T V.34 modem, characterized in that as part of the ITU-T V.8 initialization, the videophone communications is supported in that, among other things, the network is signalised of the request for a high transmission quality for the videophone communications whilst the connection is being set up, and in that the calling terminal detects the type of called terminal and the type of transmission network connected to the latter.

2. Process for controlling the videophone communications between videophone communications terminals (KES, KEE) in a virtual control channel as part of an ITU-T V.34 information transfer; characterized by a virtual control channel with HDLC LAP protected transmission of the control data blocks in bi-directional full duplex mode, with the control instructions specified in the following table:

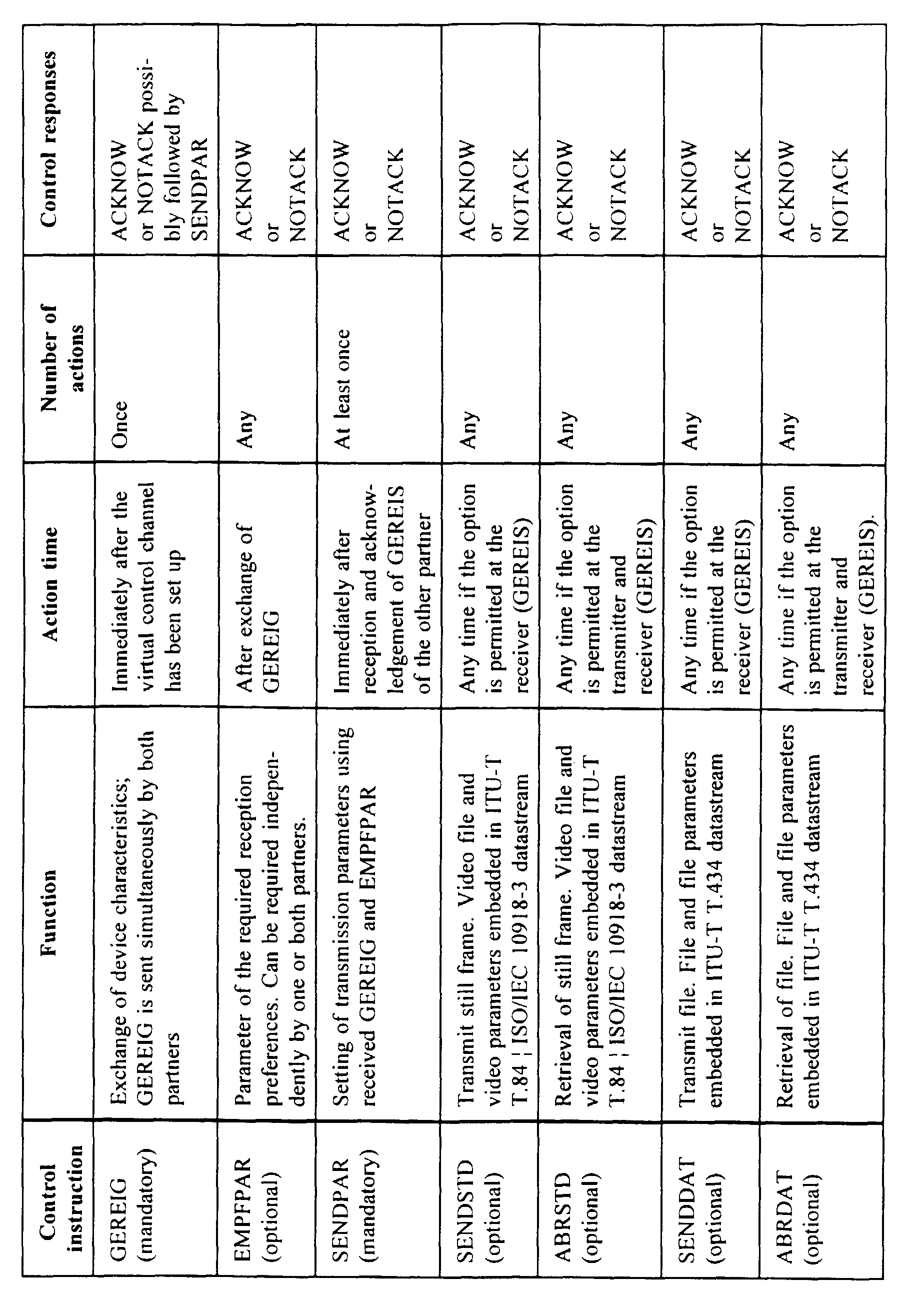

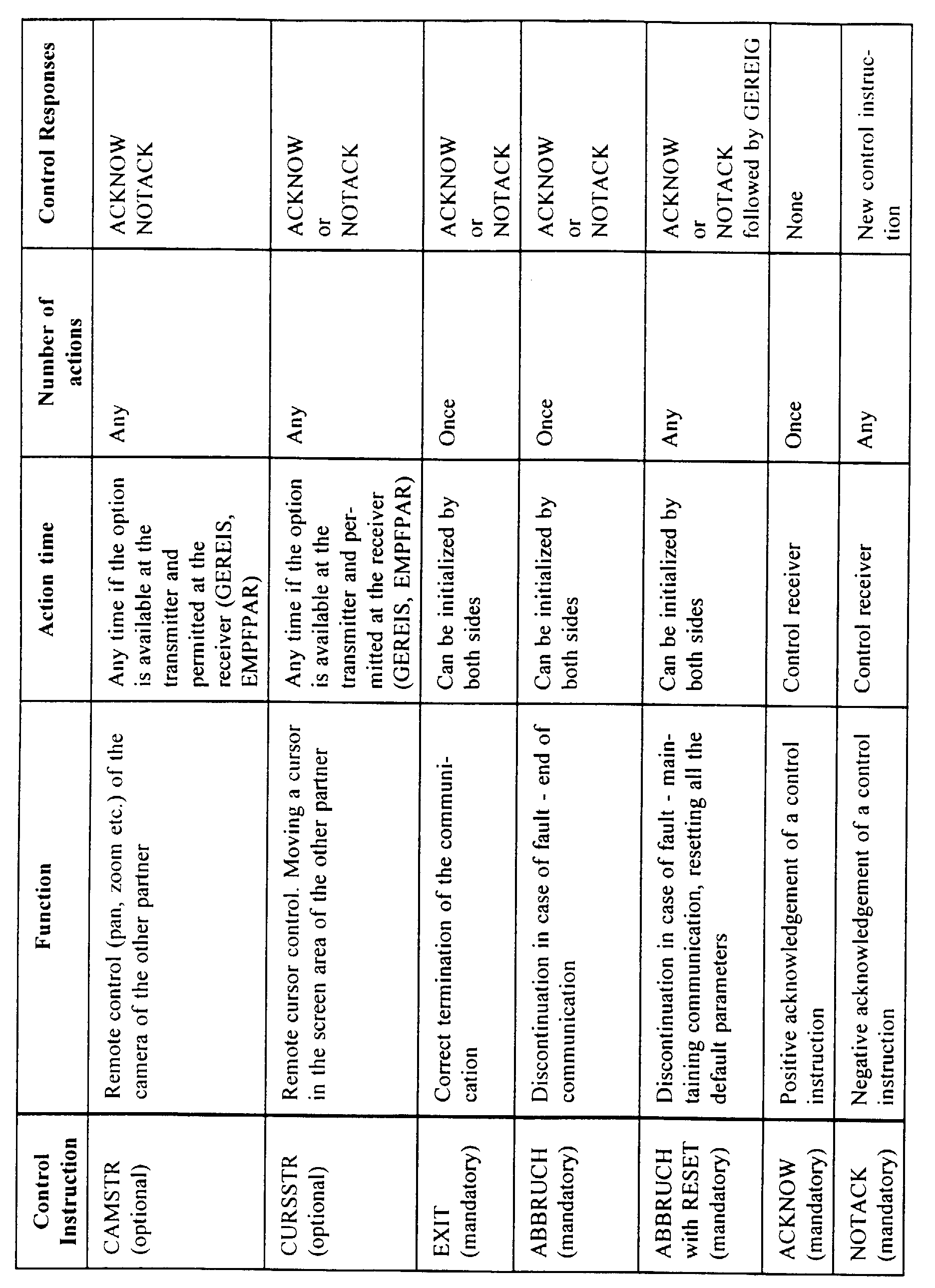

3. Process according to Claim 2, characterized in that, for the purpose of controlling different types of information, a "virtual" channel is allocated to each of the types of information with the aid of the HDLC LAP process, and either fixed or freely definable transmission priorities and/or error correction priorities are allocated to the various types of data, wherein, instead of freely definable priorities, preset standard parameters are used at the beginning of the communication which can be redefined with the aid of the control instructions EMPFPAR and SENDPAR in the course of the communication.

4. Process according to Claim 2 or 3, characterized in
that video files are embedded in ITU-T T.84 ¦ ISO/IEC 10918-3 file formats;
in that the parameters of the video files are embedded in ITU-T T.84 ¦ ISO/IEC 10918-3;
in that continuous colour pictures according to ITU-T T.81 ¦ ISO/IEC 10918-1 - "JPEG" - are supported with variable picture size with sequential or progressive picture synthesis;
in that "icons" of the continuous colour pictures according to ITU-T T.81 ¦ ISO/IEC 10918-1 - "JPEG" - are supported with variable picture size;
in that bi-level (e.g. black/white) pictures according to ITU-T T.82 ¦ ISO/IEC 11544 - "JBIG" - are supported with variable picture size with sequential or progressive picture synthesis;
in that the possibility of the transmission is negotiated and set with the control instructions GEREIG, EMPF-P-AR and SENDPAR; and
in that the transmission of still frames is controlled by means of the control instructions SENDSTD and ABRSTD and their reception is acknowledged with ACKNOW or negatively acknowledged with NOTACK in the case of a fault.

5. Process according to Claim 2, 3 or 4, characterized in that arbitrary program or data files are defined according to ITU-T T.434;
in that the possibility of the transmission is negotiated and set with the control instructions GEREIG, EMPF-P-AR and SENDPAR;
in that the file transmission is controlled by means of the control instructions SENDDAT and ABRDAT and their reception is acknowledged with ACKNOW or negatively acknowledged with NOTACK in the case of a fault.

6. Process according to Claim 2, 3, 4 or 5, characterized by the camera being remotely controlled in such a manner that the possibility of the transmission is negotiated and set by means of the control instructions GEREIG, EMPF-P-AR and SENDPAR; that the file transmission is controlled by means of the control instructions CAMSTR and their reception is acknowledged with ACKNOW or negatively acknowledged with NOTACK in the case of a fault.

7. Process according to Claim 2, 3, 4, 5 or 6, characterized by the cursor being remotely controlled in such a manner that the control takes place by means of the control instructions CURSSTR and their reception is acknowledged with ACKNOW or negatively acknowledged with NOTACK in the case of a fault and that the possibility of the transmission is negotiated and set by means of the control instructions GEREIG, EMPF-P-AR and SENDPAR.

## Revendications

1. Procédé pour l'établissement de liaison entre des terminaux de communication visiophoniques (KES, KEE) en utilisant un protocole de transmission sûr dans le cadre de l'initialisation ITU-T V.8 et d'un modem ITU-T V.34, caractérisé par le fait que la communication visiophonique est mise en oeuvre dans le cadre de l'initialisation ITU-T V.8, en signalant entre autres au réseau, pendant l'établissement même de la liaison, le souhait d'une qualité de transmission élevée pour la communication visiophonique, et que le terminal appelant reconnaît le type du terminal appelé et le type du réseau de transmission qui y est raccordé.

2. Procédé pour la commande de la communication visiophonique entre des terminaux de communication visiophoniques (KES, KEE) dans un canal de commande virtuel dans le cadre d'un transfert d'informations ITU-T V.34, caractérisé par un canal de commande virtuel avec une transmission sûre HDLC LAP des blocs de données de commande en mode duplex bilatéral simultané, avec les instructions de commande données dans le tableau suivant :
| **Instruction de commande** | **Fonction** | **Instant d'action** | **Nombre d'action** | **Réaction à la commande** |
|---|---|---|---|---|
| GEREIG (prescrit) | Echange des caractéristiques d'appareils, GEREIG est envoyé simultanément par les deux partenaires | immédiatement après la création du canal de commande virtuel | une fois | ACKNOW ou NOTACK avec ensuite, le cas échéant, SENDPAR |
| EMPFPAR (optionnel) | Paramètre des préférences de réception souhaitées. Peut être souhaité indépendamment par l'un ou les deux partenaires. | à partir de l'échange de GEREIG | quelconque | ACKNOW ou NOTACK |
| SENDPAR (optionnel) | Réglage des paramètres d'émission à l'aide de GEREIG et EMPFPAR reçus | immédiatement après la réception et l'acquittement de GEREIG de l'autre partenaire | au moins une fois | ACKNOW ou NOTACK |
| SENDSTD (optionnel) | Emission d'image fixe. Fichier d'image et paramètre d'image insérés dans le flux de données ITU-T T.84 \| ISO/IEC 10918-3 | à n'importe quel instant, si l'option est autorisée par le récepteur (GEREIG) | quelconque | ACKNOW ou NOTACK |
| ABRSTD (optionnel) | Appel d'image fixe. Fichier d'image et paramètre d'image insérés dans le flux de données ITU-T T.84 \| ISO/IEC 10918-3 | à n'importe quel instant, si l'option est autorisée par l'émetteur et le récepteur (GEREIG) | quelconque | ACKNOW ou NOTACK |
| SENDDAT (optionnel) | Emission de fichier. Fichier et paramètre de fichier insérés dans le flux de données ITU-T T.434 | à n'importe quel instant, si l'option est autorisée par le récepteur (GEREIG) | quelconque | ACKNOW ou NOTACK |
| ABRDAT (optionnel) | Appel de fichier. Fichier et paramètre de fichier insérés dans le flux de données ITU-T T.434 | à n'importe quel instant, si l'option est autorisée par l'émetteur et le récepteur (GEREIG) | quelconque | ACKNOW ou NOTACK |
| CAMSTR (optionnel) | Télécommande (pivotement, zoom, etc.) de la caméra de l'autre partenaire | à n'importe quel instant si l'option est disponible chez l'émetteur et autorisée chez le récepteur (GEREIG, EMPFPAR) | quelconque | ACKNOW ou NOTACK |
| CURSSTR (optionnel) | Télécommande de curseur. Déplacement d'un curseur sur l'image de l'autre partenaire | à n'importe quel instant si l'option est disponible chez l'émetteur et autorisée chez le récepteur (GEREIG, EMPFPAR) | quelconque | ACKNOW ou NOTACK |
| EXIT (prescrit) | Fin normale de la communication | peut être déclenché par les deux côtés | une fois | ACKNOW ou NOTACK |
| ABBRUCH (prescrit) | Interruption en cas d'erreur - fin de la communication | peut être déclenché par les deux côtés | une fois | ACKNOW ou NOTACK |
| ABBRUCH avec RESET (prescrit) | Interruption en cas d'erreur - maintien de la communication, réaffectation de tous les paramètres par défaut | peut être déclenché par les deux côtés | quelconque | ACKNOW ou NOTACK suivi de GEREIG |
| ACKNOW (prescrit) | Acquittement positif d'une instruction de commande | Récepteur de la commande | une fois | aucune |
| NOTACK (prescrit) | Acquittement négatif d'une instruction de commande | Récepteur de la commande | quelconque | nouvelle commande |

3. Procédé selon la revendication 2, caractérisé par le fait que, pour la commande de différents types d'informations, on associe à chacun des types d'informations à l'aide du procédé HDLC LAP un canal "virtuel" et on associe aux différents types de données des priorités de transmission fixes ou librement définissables et/ou des priorités de correction d'erreur fixes ou librement définissables, des paramètres normaux prédéterminés étant utilisés à la place des priorités librement définissables au début de la communication et pouvant être spécifiés à nouveau au cours de la communication à l'aide des instructions de commande EMPFPAR et SENDPAR.

4. Procédé selon la revendication 2 ou 3, caractérisé par le fait qu'on insère des fichiers d'images dans des formats de fichiers ITU-T T.84 | ISO/IEC 10918-3 ; qu'on insère les paramètres des fichiers d'images selon ITU-T T.84 | ISO/IEC 10918-3 ; qu'on autorise des images couleur continues selon ITU-T T.81 | ISO/IEC 10918-1 -"JPEG"- avec une dimension d'image variable et une construction d'image séquentielle ou progressive ; qu'on autorise des "icônes" des images couleur continues selon ITU-T T.81 | ISO/IEC 10918-1 -"JPEG"- avec une dimension d'image variable ; qu'on autorise des images à deux niveaux (par exemple en noir et blanc) selon ITU-T T.82 | ISO/IEC 11544 -"JBIG"- avec une dimension d'image variable et une construction d'image séquentielle ou progressive ; qu'on traite et règle la possibilité de la transmission avec les instructions de commande GEREIG, EMPFPAR et SENDPAR ; et qu'on met en oeuvre la commande de la transmission d'images fixes avec les instructions de commande SENDSTD et ABRSTD et la réception en est acquittée avec ACKNOW ou, en cas d'erreur, est acquittée négativement avec NOTACK.

5. Procédé selon la revendication 2, 3 ou 4, caractérisé par le fait qu'on définit des fichiers de programmes ou de données quelconques selon ITU-T T.434 ; qu'on traite et règle la possibilité de la transmission avec les instructions de commande GEREIG, EMPFPAR et SENDPAR ; qu'on met en oeuvre la commande de la transmission de fichier avec les instructions de commande SENDDAT et ABRDAT et la réception en est acquittée avec ACKNOW ou, en cas d'erreur, est acquittée négativement avec NOTACK.

6. Procédé selon la revendication 2, 3, 4 ou 5, caractérisé par une télécommande de la caméra telle qu'on traite et règle la possibilité de la transmission avec les instructions de commande GEREIG, EMPFPAR et SENDPAR ; qu'on met en oeuvre cette télécommande avec les instructions de commande CAMSTR et la réception en est acquittée avec ACKNOW ou, en cas d'erreur, est acquittée négativement avec NOTACK.

7. Procédé selon la revendication 2, 3, 4, 5 ou 6, caractérisé par une télécommande du curseur telle qu'on traite et règle la possibilité de la transmission avec les instructions de commande GEREIG, EMPFPAR et SENDPAR ; qu'on met en oeuvre cette télécommande avec les instructions de commande CURSSTR et la réception en est acquittée avec ACKNOW ou, en cas d'erreur, est acquittée négativement avec NOTACK.
